# EUROPÄISCHE PATENTANMELDUNG

(11) **EP 2 309 734 A1**
(43) Veröffentlichungstag der Anmeldung: **13.04.2011**
(21) Anmeldenummer: 10008861.6
(22) Anmeldetag: 26.08.2010
(51) Int. Cl.: H04N 5/63, G06F 1/26

(54) **Home Entertainment Anlage mit Stromsparfunktion**

(30) Priorität: 15.09.2009 DE 102009041121
(71) Anmelder: TRIAX Austria GmbH, 6830 Rankweil-Brederis (AT)
(72) Erfinder: Herschmann, Harald, 6800 Feldkirch (AT)
(74) Vertreter: Greif, Thomas

(57) **Zusammenfassung**

Die Erfindung betrifft ein Verfahren zum Betreiben einer Home Entertainment Anlage sowie eine Home Entertainment Anlage (1), die als Komponenten einen Fernseher. (2) und eine Settopbox (3) und gegebenenfalls weitere Komponenten wie einen DVD-Player (4) und einen Videorekorder (4) umfasst, wobei zumindest eine der Komponenten über eine Fernbedienung (6) bedient wird, wobei erfindungsgemäß vorgesehen ist, dass eine der Komponenten zumindest einen steuerbaren Ein-/Ausgang (11) für die Stromversorgung der anderen Komponenten aufweist und diese anderen Komponenten an diesem Ein-/Ausgang (11) angeschlossen sind.

## Beschreibung

### Beschreibung

Die Erfindung betrifft eine Home Entertainment Anlage sowie ein Verfahren zum Betreiben einer solchen Home Entertainment Anlage gemäß den Merkmalen des jeweiligen Oberbegriffes der unabhängigen Patentansprüche.

Home Entertainment Anlagen, die als Komponenten einen Fernseher und eine Settopbox und ggf. weitere Komponenten wie einen DVD-Player und einen Videorecorder umfassen, sind grundsätzlich bekannt. Mittels der Settopbox können analoge und/oder digitale Fernseh- und Rundfunksignale empfangen, aufbereitet und dem Fernseher zur Wiedergabe zugeführt werden. Diese Betriebsweise einer solchen Home Entertainment Anlage ist hinlänglich bekannt.

Jedoch besteht das Problem darin, dass dann, wenn kein Fernsehen geguckt werden soll, die Komponenten der gesamten Anlage in einen Standby-Betrieb geschaltet werden. Dies ist jedoch hinsichtlich des Energieaufwandes und der damit verbundenen Kosten von Nachteilen, da z. B. im Standby-Betrieb der Fernseher 19 Watt, die Settopbox 20 Watt, ein DVD-Player 10 Watt und ein Videorecorder 26 Watt (alles Beispielwerte) verbrauchen.

Als Möglichkeit der Energieeinsparung ist im Stand der Technik schon bekannt geworden, dass die Komponenten der Home Entertainment Anlage dahingehend weiter entwickelt und verbessert werden, dass der Energiebedarf im Standby-Modus verringert wird. Hierzu ist jedoch ein erheblicher Entwicklungsaufwand erforderlich, wobei trotz allem Aufwand im Standby-Modus ein Rest Energiebedarf bestehen bleibt. Alternativ dazu ist es im Stand der Technik bekannt geworden, dass die jeweilige Komponente mittels ihres Netzschalters komplett ausgeschaltet wird (d. h., es liegt kein Standby-Modus mehr vor, so dass das Gerät vollkommen vom Netz getrennt ist) oder aber dass der Netzstecker komplett gezogen wird. Diese beiden Varianten jedoch aus Sicht des Anwenders äußerst aufwendig, da er bei zwei oder mehr Komponenten der Home Entertainment Anlage den hier beiliegenden Netzschalter betätigen bzw. den jeweiligen Netzstecker ziehen müsste. Weiterhin ist im Stand der Technik empfohlen worden, die Komponenten der Home Entertainment Anlage an einer schaltbaren Steckdosenleiste oder an einer Funksteckdosenleiste zu betreiben. Dies bedeutet aber ebenfalls wieder zusätzlichen baulichen Aufwand und auch für den Anwender zusätzlichen Bedienungsaufwand. Schließlich wurde im Stand der Technik noch empfohlen, Komponenten der Home Entertainment Anlage mit einer Automatik zu versehen, mittels der das Gerät nach einer gewissen Zeit in den Standby-Modus wechselt (Timerfunktion). Aber auch diese Vorgehensweise ist nachteilig, da oftmals eine Komponente dann in den Standby-Modus wechselt, wenn dies vom Anwender nicht gewünscht ist. Andererseits kann die Zeitspanne zu groß sein, bis das die Komponente automatisch in den Standby-Modus wechselt, so dass während dieser Zeit unnötig viel Energie aufzuwenden ist.

Der Erfindung liegt daher die Aufgabe zugrunde, die eingangs geschilderten Nachteile zu vermeiden, wobei gleichzeitig der bauliche Aufwand verringert und der Bedienungskomfort für den Anwender einer Home Entertainment Anlage verbessert werden soll.

Diese Aufgabe ist durch die Merkmale der beiden unabhängigen Patentansprüche gelöst.

Bezüglich der Home Entertainment Anlage an sich ist erfindungsgemäß vorgesehen, dass eine der Komponenten zumindest einen steuerbaren Ein-/Ausgang für die Stromversorgung der anderen Komponenten aufweist und diese anderen Komponenten an diesem Ein-/Ausgang angeschlossen sind. Das bedeutet, dass die Stromversorgung der anderen Komponenten über eine Komponente vorgenommen wird, so dass mit dem Ein- bzw. Ausschalten dieser einen Komponente auf die anderen daran angeschlossenen Komponenten ein- bzw. ausgeschaltet werden. Dabei bewirkt dieser Schaltvorgang, dass die anderen Komponenten vollständig von der Spannungsversorgung (Stromnetz) getrennt werden, so dass sie sich nicht mehr im Standby-Modus befinden und daher keinerlei Energie mehr während dieses Zustandes aufnehmen. Lediglich die eine Komponente verbleibt im Standby-Modus, so dass dadurch der Energieverbrauch in der Zeit, in der die Home Entertainment Anlage nicht in Betrieb ist, deutlich gesenkt wird. Diese Ausgestaltung lässt sich mit einfachen Mitteln bewirken, so dass dadurch der Energieverbrauch der gesamten Home Entertainment Anlage während des Standby-Betriebes deutlich gesenkt wird. Gleichzeitig vereinfacht sich die Bedienung der gesamten Home Entertainment Anlage für den Anwender, da er mit Bedienung der einen Komponente der gesamten Anlage bewirkt, dass die übrigen Komponenten vollständig vom Netz getrennt werden. Die aus dem Stand der Technik bekannten Vorgehensweisen werden damit vermieden und deutlich vereinfacht.

In Weiterbildung der Erfindung weist die Fernbedienung ein Bedienelement für die Steuerung des Ein-/Ausganges der einen Komponente der Home Entertainment Anlage auf. Neben den üblichen und an sich bekannten Bedienelementen der Fernbedienung, wie z. B. Kanalwahl, Lautstärkeeinstellung, Menübedienung und dergleichen, ist in besonders vorteilhafter Weise ein weiteres, zusätzliches Bedienelement vorgesehen. Mittels dieses Bedienelementes kann der Anwender auf schnelle und einfache Art und Weise bewirken, dass die eine Komponente der Home Entertainment Anlage in den Standby-Modus versetzt wird und gleichzeitig die anderen, an dieser Komponente angeschlossenen weiteren Komponenten vollständig vom Netz getrennt werden, so dass sie während des Standby-Betriebes keinerlei Energie mehr aufnehmen.

In Weiterbildung der Erfindung ist entweder der steuerbare Ein-/Ausgang für die Stromversorgung der anderen Komponenten in der einen Komponente integriert oder alternativ dazu herausgeführt. Im erstgenannten Fall weist die eine Komponente beispielsweise auf der Rückseite ihres Gehäuses mehrere Anschlüsse für die Stromversorgung der anderen Komponenten auf. Dies können beispielsweise übliche Steckdosen sein, in die die Netzstecker bei Einrichtung der gesamten Home Entertainment Anlage einmalig eingesteckt werden. Für den Fall, dass einzelne Komponenten der Home Entertainment Anlage räumlich verteilt sind, ist es von Vorteil, dass der steuerbare Ein-/Ausgang für die Stromversorgung zumindest einer weiteren anderen Komponente aus der einen Komponente herausgeführt ist. Das bedeutet, dass beispielsweise aus der Rückseite des Gehäuses der einen Komponente ein Kabel herausgeführt ist, das in einer Steckdose endet, in die der Netzstecker zumindest einer weiteren anderen Komponente eingesteckt werden kann. Selbstverständlich ist auch die Kombination z. B. zumindest einer integrierten Steckdose in dem Gehäuse der einen Komponente und ein Herausführen des steuerbaren Ein-/Ausganges mittels Kabels aus der einen Komponente heraus denkbar.

In besonders vorteilhafter Weise ist ein einziger zentraler steuerbarer Ein-/Ausgang für die Stromversorgung der anderen Komponenten in der einen Komponente vorgesehen. Dies ist insbesondere dann von Vorteil, wenn sich alle Komponenten der Home Entertainment Anlage, wie der Fernseher, die Settopbox und die ggf. weiteren Komponenten wie der DVD-Player, der Videorecorder und ggf. weitere Komponenten in räumlicher Nähe befinden. Damit ist gewährleistet, dass die eine Komponente zentral die steuerbare Stromversorgung für die anderen Komponenten übernimmt und gleichzeitig auch diese eine Komponente die Anschlussmöglichkeiten für die Spannungsversorgung der weiteren Komponenten zentral zur Verfügung stellt.

In Weiterbildung der Erfindung ist die eine Komponente mit dem zentralen steuerbaren Ein-/Ausgang die Settopbox. Dies hat den Vorteil, dass die Settopbox in einer Home Entertainment Anlage im Regelfall diejenige Komponente ist, die im Standby-Modus den geringsten Stromaufwand erfordert. Außerdem ist es möglich, mittels der in der Settopbox integrierten Speichereinheit (z. B. eine Festplatte) zeitgesteuert Fernsehprogramme aufzunehmen, ohne dass die anderen Komponenten der Home Entertainment Anlage in Betrieb sein müssen. In einem solchen Fall können z. B. Filme aufgezeichnet werden, ohne dass hierzu der angeschlossene DVD-Player in Betrieb genommen werden müsste.

Weiterhin ist gemäß der Erfindung ein Verfahren zum Betreiben der Home Entertainment Anlage vorgesehen, wobei eine der Komponenten zumindest einen steuerbaren Ein-/Ausgang für die Stromversorgung der anderen Komponenten aufweist und die Stromversorgung dieser anderen Komponenten über diesen Ein-/Ausgang ein- bzw. ausgeschaltet wird. Mittels dieses Verfahrens lässt sich der Betrieb der Home Entertainment Anlage vereinfachen, weil mit dem Übergang der einen Komponente von dem normalen Betrieb in den Standby-Modus die anderen Komponenten der gesamten Anlage komplett ausgeschaltet, d. h. vom Stromnetz getrennt werden. Außerdem lässt sich die Bedienung in diesem Fall wesentlich vereinfachen, da mit nur einem Schaltvorgang die übrigen Komponenten der Anlage vom Netz getrennt werden, und dadurch nennenswert Energie eingespart werden kann. Durch diesen Energiesparvorgang lassen sich seitens der einzelnen Anwender nennenswerte Kosten im Laufe der Zeit einsparen, wobei auch durch die Verringerung des Energieaufwandes der Ausstoß von schädlichen Immissionen bei der Energieerzeugung, insbesondere der CO²-Ausstoß, nennenswert verringern lässt. Je nach Anzahl der eingesetzten erfindungsgemäßen Home Entertainment Anlagen lässt sich dadurch der CO²-Ausstoß nennenswert in Größenordnungen deutlich größer als 100 Tonnen pro Jahr verringern.

In Weiterbildung der Erfindung ist vorgesehen, dass die Schaltfunktion über ein Bedienelement für die Steuerung des Ein-/Ausganges der Fernbedienung erfolgt. Damit lässt sich quasi per Knopfdruck jede Komponente einzeln, in Gruppen oder vollständig, die nicht benötigt werden, vom Netz trennen, ohne dass ein Standby-Modus dieser Komponenten erforderlich wäre. Das bedeutet, dass in vorteilhafter Weise die Stromversorgung entweder nur einer Komponente, mehrerer Komponenten oder aller Komponenten (mit Ausnahme derjenigen Komponente der Home Entertainment Anlage, die die Schaltfunktion durchführt) über die Fernbedienung ein- bzw. ausgeschaltet wird. Diese zentral auszuführende Schaltfunktion erhöht in besonders vorteilhafter Weise den Bedienkomfort für den Anwender der gesamten Home Entertainment Anlage.

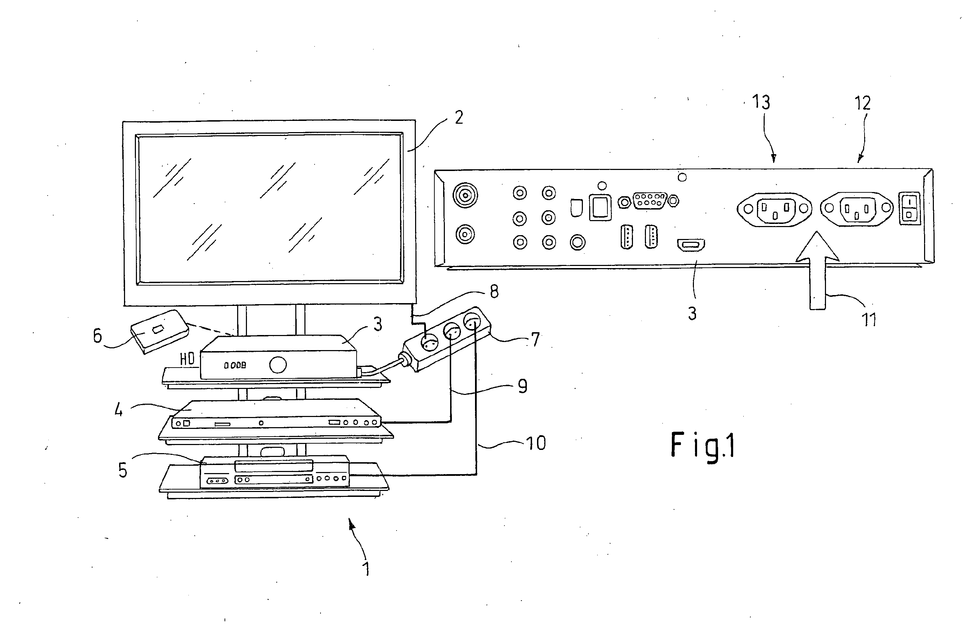

Eine beispielhafte Ausführungsform einer Home Entertainment Anlage sowie ein Verfahren zum Betreiben einer solchen Home Entertainment Anlage ist in der Figur 1 dargestellt.

Mit der Bezugsziffer 1 ist, soweit im Einzelnen dargestellt, eine Home Entertainment Anlage bezeichnet, die einen Fernseher 2, eine Settopbox 3 und ggf. weitere Komponenten, wie einen DVD-Player 4, einen Videorecorder 5 und dergleichen aufweist. Die vorstehend genannten Komponenten sind bei dem Ausführungsbeispiel gemäß Figur 1. in einem Reck in räumlicher Nähe angeordnet, wobei sie auch räumlich beabstandet voneinander z. B. in einem Zimmer angeordnet sein können. Mittels der Settopbox 3 werden über Kabel oder über Satellit oder sonstige Empfangsmöglichkeiten Fernseh- und/oder Rundfunksignale empfangen, aufbereitet und dem Fernseher 2 zur Wiedergabe zugeführt. Mittels des DVD-Players 4 können dort gespeicherte und abrufbare Daten (wie z. B. Filme) auf dem Fernseher 2 wiedergegeben werden. Gleiches gilt für den Videorecorder 5. Daneben ist es auch denkbar und möglich, dass die Settopbox 3 ihrerseits eine Speichereinheit (z. B. Festplatte) aufweist, mit der die empfangenen Signale abgespeichert und zeitgleich oder zeitversetzt auf dem Fernseher 2 wiedergegeben werden können.

Insbesondere die Settopbox 3, aber auch die anderen Komponenten der Home Entertainment Anlage 1, können mittels einer Fernbedienung 6 gesteuert werden. Von besonderem Vorteil ist es dann, wenn die Fernbedienung 6 dazu ausgestaltet und geeignet ist, alle Funktionen der Komponenten der Home Entertainment Anlage 1 zu steuern. Daneben ist es nicht ausgeschlossen, dass jede einzelne Komponente der Home Entertainment Anlage 1 eine eigene Fernbedienung aufweist.

In der linken Darstellung der Figur 1 ist gezeigt, dass aus der einen Komponente der Home Entertainment Anlage 1, hier der Settopbox 3, eine geschaltete Spannungsversorgung 7 herausgeführt ist, an der über Stromversorgungsleitungen 8 bis 10 die Komponenten 2 und 4, 5 angeschlossen sind. Diese geschaltete Spannungsversorgung 7 der Settopbox 3 bewirkt, dass über einen entsprechenden Schaltbefehl, ausgelöst über die Fernbedienung 6, die an der geschalteten Spannungsversorgung 7 angeschlossenen Komponenten zentral gesteuert ein- bzw. ausgeschaltet werden können. Das bedeutet, wenn z. B. mittels einen bestimmten Bedienelementes über die Fernbedienung 6 die Settopbox 3 in den Standby-Modus geschaltet wird, wird auch die geschaltete Spannungsversorgung betätigt, so dass die daran angeschlossenen Komponenten vom Stromnetz getrennt werden. Diese befinden sich dann nicht mehr im Standby-Modus, sondern sind vollständig ausgeschaltet. Das bedeutet umgekehrt, dass die Komponenten der Home Entertainment Anlage 1 dazu ausgebildet und geeignet sein müssen, dass sie ihren Betrieb wieder aufnehmen, wenn über die Fernbedienung 6 die Settopbox 3 in den normalen Betrieb geschaltet worden ist und die Spannungsversorgung für die anderen Komponenten ebenfalls wieder eingeschaltet wurde. Die Fernbedienung 6, die der Settopbox 3 zugeordnet ist, weist beispielsweise ein Bedienelement auf, um die Settopbox 3 in den Standby-Modus zu schalten, und ein weiteres Bedienelement, mit dem die geschaltete Spannungsversorgung 7 geschaltet wird. D. h., aufgrund des Vorhandenseins von zwei getrennten Bedienelementen kann der Anwender gezielt auswählen, ob er die Settopbox 3 in den Standby-Modus schalten will und/oder auch die geschaltete Spannungsversorgung 7 betätigen will (Abschalten der anderen Komponenten der Home Entertainment Anlage 1). Daneben ist es denkbar, dass mit Betätigen eines Bedienelementes der Fernbedienung 6 sowohl die Settopbox 3 in den Standby-Modus geschaltet wird und auch die geschaltete Spannungsversorgung 7 betätigt wird.

In der rechten Darstellung der Figur 1 ist beispielhaft die Rückseite eines Gehäuses der einen Komponente, hier wieder der Settopbox 3, beispielhaft gezeigt, wobei neben verschiedenen Eingängen und Ausgängen für die Signalzufuhr und Signalabgabe ein Ein-/Ausgang 11 vorgesehen ist, der hier zentral in Form von einem Stromversorgungseingang 12 und zumindest einem Stromversorgungsausgang 13 ausgebildet ist. Über den Stromversorgungseingang 12 ist in an sich bekannter Weise die Settopbox 3 mit dem Stromnetz verbunden. An dem zumindest einen Stromversorgungsausgang 13 kann entweder die geschaltete Stromversorgung 7 (Mehrfachsteckdose mit Kabel) angeschlossen werden oder dieser zumindest eine Stromversorgungsausgang 13 ist mehrfach vorhanden und z. B. als Steckdose ausgebildet, in die die Netzstecker der Komponenten 2, 4, 5 (ggf. weniger oder auch mehr Komponenten) eingesteckt werden. Dieser einfach oder auch mehrfach vorhandene Stromversorgungsausgang 13 ist dann zentral innerhalb der Settopbox 3 schaltbar, wenn ein entsprechendes Bedienelement der Fernbedienung 6 der Settopbox 3 betätigt wird. Selbstverständlich ist es ergänzend oder alternativ auch möglich, ein solches Bedienelement an der Settopbox 3 selbst vorzunehmen. Außerdem kann daran gedacht werden, ein Bedienelement einer Fernbedienung einer der anderen Komponenten der Home Entertainment Anlage 1 zur Ausübung des Schaltvorganges zu verwenden.

Die Erfindung bietet also ein sehr gutes Potential zur Energieeinsparung, da dann, wenn die Home Entertainment Anlage 1 nicht in Betrieb ist, alle Komponenten dieser Anlage, die nicht benötigt werden, vollkommen ausgeschaltet, d. h. vom Stromnetz getrennt werden. Lediglich eine Komponente, vorzugsweise die Settopbox 3, verbleibt im Standby-Modüs, so dass diese Komponente auf einen geringen Energieaufwand im Standby-Modus hin optimiert werden kann, so dass dieser Energieaufwand in diesem Fall beispielsweise > 1 Watt ist. Gleichzeitig erhöht sich der Bedienkomfort, da zentral mit dem Betätigen eines Bedienelementes die eine Komponente, vorzugsweise die Settopbox 3, in den Standby-Modus geschaltet wird, während alle anderen Komponenten der Home Entertainment Anlage 1 vollständig vom Netz getrennt werden, d. h. ausgeschaltet werden und somit keine Energie mehr verschwendet.

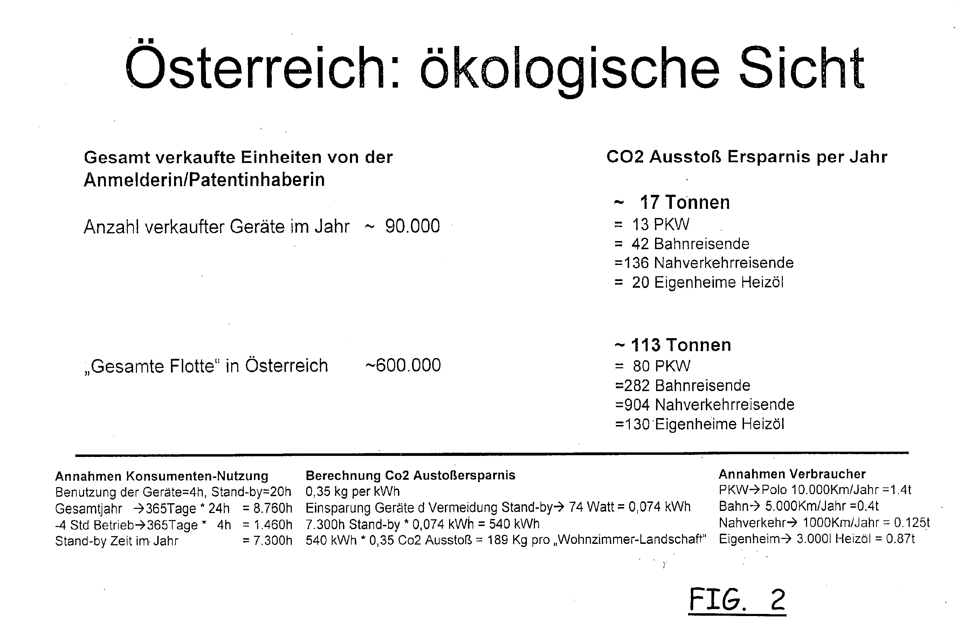

In Figur 2 ist am Beispiel des Receiver-Marktes in Österreich beispielhaft angegeben, wie sich aus ökologischer Sicht die Erfindung positiv auswirkt und auf dieser Basis der Co2-Ausstoss nennenswert verringert wird. Analog gelten die Annahmen für die Berechnung auch für andere Länder.

### Bezugszeichenliste

- 1.: Home Entertainment Anlage
- 2.: Fernseher
- 3.: Settopbox
- 4.: DVD-Player
- 5.: Videorekorder
- 6.: Fernbedienung
- 7.: geschaltete Spannungsversorgung
- 8.: Stromversorgungsleitung
- 9.: Stromversorgungsleitung
- 10.: Stromversorgungsleitung
- 11.: Ein-/Ausgang
- 12.: Stromversorgungseingang
- 13.: Stromversorgungsausgang

## Patentansprüche

1. Home Entertainment Anlage (1), die als Komponenten einen Fernseher (2) und eine Settopbox (3) und gegebenenfalls weitere Komponenten wie einen DVD-Player (4) und einen Videorekorder (4) umfasst, wobei zumindest eine der Komponenten über eine Fernbedienung (6) bedient wird, **dadurch gekennzeichnet, dass** eine der Komponenten zumindest einen steuerbaren Ein-/Ausgang (11) für die Stromversorgung der anderen Komponenten aufweist und diese anderen Komponenten an diesem Ein-/Ausgang (11) angeschlossen sind.

2. Home Entertainment Anlage (1) nach Anspruch 1, **dadurch gekennzeichnet, dass** die Fernbedienung (6) ein Bedienelement für die Steuerung des Ein-/Ausganges (11) aufweist.

3. Home Entertainment Anlage (1) nach Anspruch 1 oder 2, **dadurch gekennzeichnet, dass** der steuerbare Ein-/Ausgang (11) für die Stromversorgung der anderen Komponenten in der einen Komponente integriert ist.

4. Home Entertainment Anlage (1) nach Anspruch 1 oder 2, **dadurch gekennzeichnet, dass** der steuerbare Ein-/Ausgang (11) für die Stromversorgung der anderen Komponenten aus der einen Komponente herausgeführt ist.

5. Home Entertainment Anlage (1) nach einem der vorhergehenden Ansprüche, **dadurch gekennzeichnet, dass** ein einziger zentraler steuerbarer Ein-/Ausgang (11) für die Stromversorgung der anderen Komponenten vorgesehen ist.

6. Home Entertainment Anlage (1) nach einem der vorhergehenden Ansprüche, **dadurch gekennzeichnet, dass** die Komponente mit dem zentralen steuerbaren Ein-/Ausgang (11) die Settopbox (3) ist.

7. Verfahren zum Betreiben einer Home Entertainment Anlage (1), die als Komponenten einen Fernseher (2) und eine Settopbox (3) und gegebenenfalls weitere Komponenten wie einen DVD-Player (4) und einen Videorekorder (4) umfasst, wobei zumindest eine der Komponenten über eine Fernbedienung (6) bedient wird, **dadurch gekennzeichnet, dass** eine der Komponenten zumindest einen steuerbaren Ein-/Ausgang (11) für die Stromversorgung der anderen Komponenten aufweist und die Stromversorgung dieser anderen Komponenten über diesen Ein-/Ausgang (11) ein- bzw. ausgeschaltet wird.

8. Verfahren nach Anspruch 7, **dadurch gekennzeichnet, dass** die Schaltfunktion über ein Bedienelement für die Steuerung des Ein-/Ausganges (11) der Fernbedieung (6) erfolgt.

9. Verfahren nach Anspruch 8, **dadurch gekennzeichnet, dass** die Stromversorgung einer Komponente, mehrerer Komponenten oder aller Komponenten über die Fernbedienung ein- bzw. ausgeschaltet wird.

10. Verfahren nach Anspruch 7, 8 oder 9, **dadurch gekennzeichnet, dass** die Komponente mit dem zentralen steuerbaren Ein-/Ausgang (11) die Settopbox (3) ist und die Steuerung der Stromversorgung der anderen Komponenten über die Fernbedienung (6) der Settopbox (3) erfolgt.
